# EUROPEAN PATENT APPLICATION

(11) **EP 3 579 121 A1**
(43) Date of publication of application: **11.12.2019**
(21) Application number: 18175944.0
(22) Date of filing: 05.06.2018
(51) Int. Cl.: G06F 17/28, G10L 15/22, G06F 3/16, G10L 13/00, G10L 15/26

(54) **AUDIO OUTPUTS**

(71) Applicant: Nokia Technologies Oy, 02610 Espoo (FI)
(72) Inventor: LEPPÄNEN, Jussi, 33580 Tampere (FI); VILERMO, Miikka, 37200 Siuro (FI); LEHTINIEMI, Arto, 33880 Lempäälä (FI); MATE, Sujeet Shyamsundar, 33720 Tampere (FI)
(74) Representative: Nokia EPO representatives

(57) **Abstract**

Apparatus, methods and computer programs are described comprising: providing a first audio output, the first audio output comprising an initial portion during which an initial part of a user speech of a first user is provided followed by a translation portion period during which a translation of the user speech is provided, wherein the initial portion has a duration at least equal to a time delay caused by obtaining a translation of at least part of the user speech; and providing a second audio output to the first user, wherein the second audio output is provided after the user speech ends until the provision of the translation portion of the first audio output ends.

## Description

### Field

The present specification relates to the provision of an audio output including user speech and translations of user speech.

### Background

The provision of an audio output including translations of user speech presents challenges. For example, delays in the translation process can present difficulties.

### Summary

In a first aspect, this specification describes an apparatus comprising: means for providing a first audio output, the first audio output comprising an initial portion during which a part (e.g. an initial part) of a user speech of a first user is provided (e.g. to a second user) followed by a translation portion during which a translation of the user speech is provided (e.g. to a second user), wherein the initial portion has a duration at least equal to a time delay caused by obtaining a translation of at least a first part of the user speech (wherein the first part of the user speech may be the same as or may be different to the part (e.g. initial part) of the user speech of the first user provided in the initial portion of the first audio output); and means for providing a second audio output to the first user, wherein the second audio output is provided after the user speech ends until the provision of the translation portion of the first audio output ends. Some example embodiments may further comprise means for receiving the user speech from the first user (for example, using an audio input and/or using a mobile communication device.)

Some example embodiments may further comprise means for detecting the end of the user speech. For example, the means for detecting the end of user speech may comprise a voice activity detection module and/or detecting a predefined input received from the first user.

The second audio output may comprise a part of the translation of the user speech. Alternatively, the second audio output may comprise a second part of the user speech (which may be different to the first part of the user speech).

In some example embodiments, the translation of the user speech is generated by a speech-to-speech translation module.

Some example embodiments may further comprise means for rendering the first audio output to one or more receiving parties (for example using audio output devices, such as loudspeakers) and/or means for rendering the second audio output to the first user (for example using audio output devices, such as loudspeakers).

The said means may comprise: at least one processor; and at least one memory including computer program code, the at least one memory and the computer program code configured, with the at least one processor, to cause the performance of the apparatus.

In a second aspect, this specification describes a method comprising: providing a first audio output, the first audio output comprising an initial portion during which a part (e.g. an initial part) of a user speech of a first user is provided (e.g. to a second user) followed by a translation portion period during which a translation of the user speech is provided (e.g. to a second user), wherein the initial portion has a duration at least equal to a time delay caused by obtaining a translation of at least part of the user speech; and providing a second audio output to the first user, wherein the second audio output is provided after the user speech ends until the provision of the translation portion of the first audio output ends.

Some embodiments may include detecting the end of the user speech (for example, using a voice activity detection module and/or by detecting a predefined input received from the first user).

The translation of the user speech and/or the first audio output may be generated at a user device of the first user. Alternatively, the translation of the user speech and/or the first audio output may be generated at a server.

The translation of the user speech may, for example, be generated by a speech-to-speech translation module, at a user device of the first user and/or at a server.

In a third aspect, this specification describes an apparatus configured to perform any method as described with reference to the second aspect.

In a fourth aspect, this specification describes computer readable instructions which, when executed by computing apparatus, cause the apparatus to perform a method as described with reference to the second aspect.

In a fifth aspect, this specification describes a computer program comprising instructions for causing an apparatus to perform at least the following: provide a first audio output, the first audio output comprising an initial portion during which a part (e.g. an initial part) of a user speech of a first user is provided followed by a translation portion period during which a translation of the user speech is provided, wherein the initial portion has a duration at least equal to a time delay caused by obtaining a translation of at least part of the user speech; and provide a second audio output to the first user, wherein the second audio output is provided after the user speech ends until the provision of the translation portion of the first audio output ends.

In a sixth aspect, this specification describes a computer readable medium (e.g. a non-transitory computer readable medium) comprising program instructions stored thereon for performing at least the following: providing a first audio output, the first audio output comprising an initial portion during which a part (e.g. an initial part) of a user speech of a first user is provided followed by a translation portion period during which a translation of the user speech is provided, wherein the initial portion has a duration at least equal to a time delay caused by obtaining a translation of at least part of the user speech; and providing a second audio output to the first user, wherein the second audio output is provided after the user speech ends until the provision of the translation portion of the first audio output ends.

In a seventh aspect, this specification describes an apparatus comprising: at least one processor; and at least one memory including computer program code which, when executed by the at least one processor, causes the apparatus to: provide a first audio output, the first audio output comprising an initial portion during which a part (e.g. an initial part) of a user speech of a first user is provided followed by a translation portion period during which a translation of the user speech is provided, wherein the initial portion has a duration at least equal to a time delay caused by obtaining a translation of at least part of the user speech; and provide a second audio output to the first user, wherein the second audio output is provided after the user speech ends until the provision of the translation portion of the first audio output ends.

### Brief description of the Drawings

Example embodiments will now be described, by way of non-limiting example, with reference to the accompanying drawings in which:
FIG. 1 is a block diagram of a translation system;
FIGS. 2A and 2B are block diagrams of a system in accordance with example embodiments;
FIG. 3 is a flow chart showing an algorithm in accordance with an example embodiment;
FIG. 4 shows example outputs in accordance with an example embodiment;
FIG. 5 is a flow chart showing an algorithm in accordance with an example embodiment;
FIG. 6 is a block diagram of a system in accordance with an example embodiment.
FIGS. 7A and 7B show tangible media, respectively a removable memory unit and a compact disc (CD) storing computer-readable code which when run by a computer perform operations according to embodiments.

### Detailed description

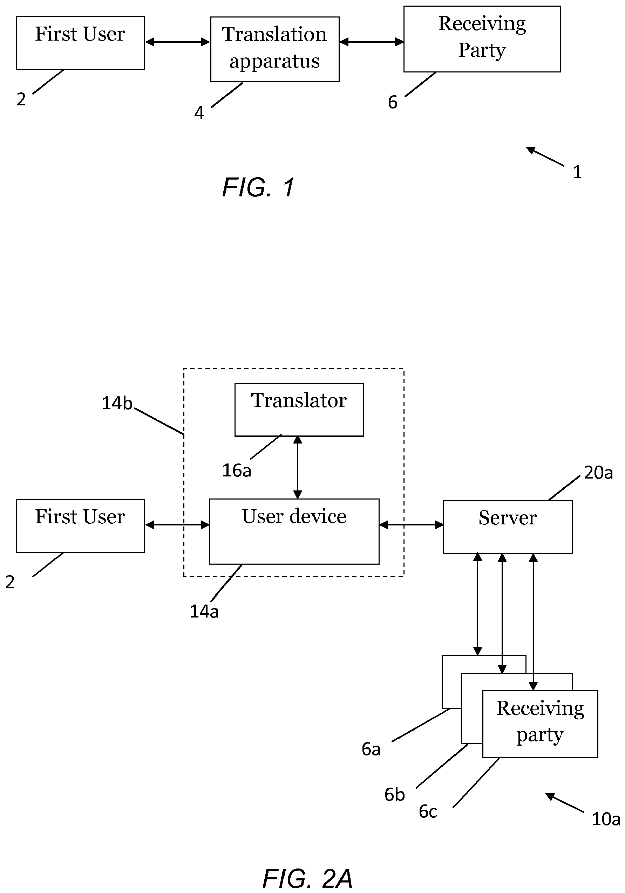

FIG. 1 is a block diagram of a translation system, indicated generally by the reference numeral 1. The translation system 1 comprises a first user 2, a translation apparatus 4, and a receiving party 6. The first user communicates with the receiving party 6 through the translation apparatus 4. User speech is received from the first user 2, and translated at the translation apparatus 4 into translated speech. A first audio output is generated at the translation apparatus 4 and sent to the receiving party 6. The translation apparatus 4 may comprise at least one user device. Similarly, user speech generated at the receiving party 6 may be translated by the translation apparatus 4 and provided to the first user 2. Further details of the translation system 1 are described below.

FIG. 2A is a block diagram of a system, indicated generally by the reference numeral 10a, in accordance with an example embodiment. The system 10a comprises the first user 2, user device 14 (representing user device 14a and 14b, unless stated otherwise), translator 16a, server 20a, and one or more receiving parties 6a-6c (similar to receiving party 6). The first user 2 communicates with user device 14, user device 14 connects to server 20a, and server 20a connects to the one or more receiving parties 6a-6c. The user device 14, translator 16a and the server 20a may collectively form translation apparatus 4. Therefore, the first user 2 communicates with the one or more receiving parties 6a-6c using the user device 14 and through the server 20a. User device 14 may be a communication device, such as a personal computer, a mobile phone, a tablet, or any other device that may allow the first user 2 to communicate with one or more receiving parties 6a-6c. Translator 16a may be a speech-to-speech translation module comprised within a user device, such as user device 14b. Alternatively, translator 16a may be a third-party speech-to-speech translation application that is used by user device 14a to obtain translation of user speech. Thus, the translator 16a may be remote from the user device 14a (rather than forming part of the user device 14b as shown in FIG. 2A). It would be apparent to those of ordinary skill in the art that there may be many available translation tools for translating speech. The user device 14 may send or receive data to or from the one or more receiving parties 6a-6c through server 20a. Server 20a may be a router, a network node, a desktop, a laptop, a mobile device, or any electronic device that may store, send, and receive data. Server 20a may be operatively connected to a telephone network, or interconnected networks (for example, the Internet). For example, server 20a may be a part of an audio and/or video conferencing service that allows the first user 2 and the one or more receiving parties 6a-6c to communicate with each other.

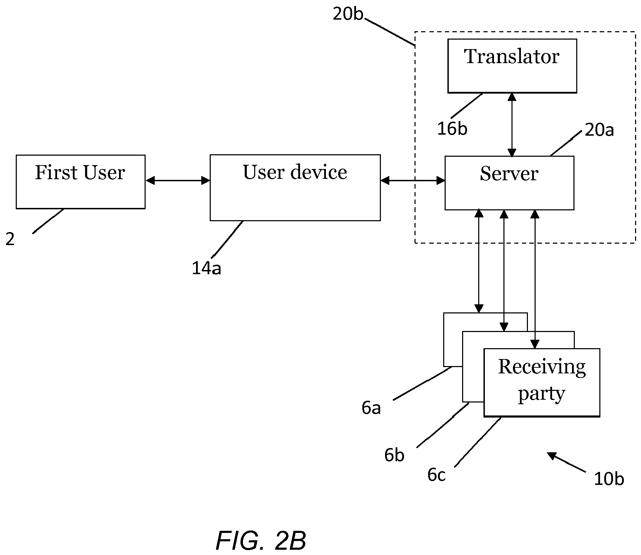

FIG. 2B is a block diagram of a system, indicated generally by the reference numeral 10b, in accordance with an example embodiment. System 10b differs from system 10a in that the translator is comprised within a server or is used by the server to obtain translation of the user speech, rather than being comprised within a user device or used by the user device. The system 10b comprises the first user 2, user device 14a, translator 16b, server 20 (representing servers 20a and 20b, unless stated otherwise), and one or more receiving parties 6a-6c. The first user 2 communicates with user device 14a, user device 14a connects to server 20, and server 20 connects to the one or more receiving parties 6a-6c. The user device 14a and the server 20 may collectively form translation apparatus 4. Therefore, the first user 2 communicates with the one or more receiving parties 6a-6c using the user device 14a and through the server 20. Translator 16b may be a speech-to-speech translation module comprised within a server, such as server 20b. Alternatively, translator 16b may be a third-party speech-to-speech translation application that is used by server 20a to obtain translation of user speech. Thus, the translator 16b may be remote from the server 20a (rather than forming part of the server 20b as shown in FIG. 2B). The user device 14a may send or receive data to or from the one or more receiving parties 6a-6c through server 20. Server 20 may be a router, a network node, a desktop, a laptop, a mobile device, or any electronic device that may store, send, and receive data. Server 20 may be operatively connected to a telephone network, or interconnected networks (for example, the Internet). For example, server 20 may be a part of an audio and/or video conferencing service that allows the first user 2 and the one or more receiving parties 6a-6c to communicate with each other.

In addition to providing for communication between the first user 2 and one or more of the receiving parties 6a to 6c, the systems 10a and 10b may allow for communication between one or more of the receiving parties 6a to 6c and the first user 2.

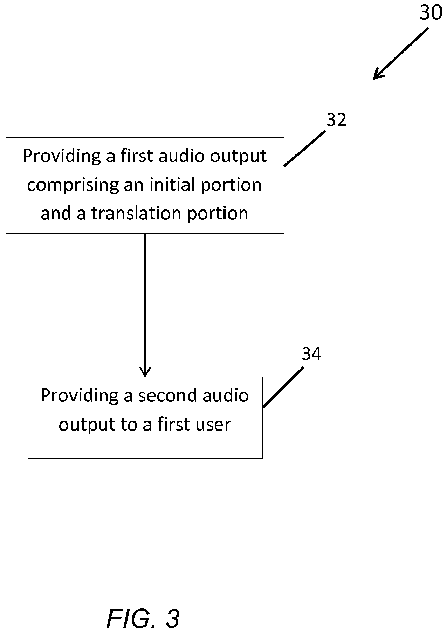

FIG. 3 is a flow chart showing an algorithm, indicated generally by the reference numeral 30, in accordance with an example embodiment.

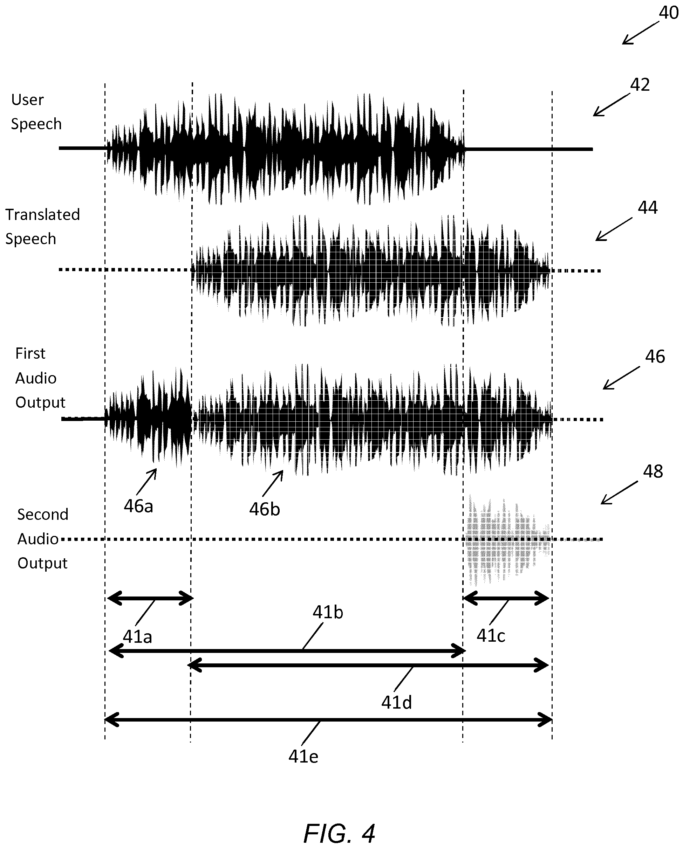

The algorithm 30 starts at operation 32, where a first audio output is provided by the translation system, such as the translation systems 1, 10a, and 10b. The first audio output comprises an initial portion and a translation portion. The initial portion comprises part of a user speech, and the translation portion comprises a translation of the user speech. The first audio output may be provided to at least one of the one or more receiving parties 6a-6c. At operation 34, a second audio output is provided to a first user 2. Examples of the first audio output and the second audio output are described in more detail below with reference to FIG. 4.

FIG. 4 shows example outputs, indicated generally by the reference numeral 40, in accordance with an example embodiment.

The example outputs 40 comprise user speech 42, translated speech 44, first audio output 46, and second audio output 48. The solid black example outputs represent at least part of the user speech 42, and the dotted black example outputs represent at least part of the translated speech 44. The durations of the example outputs, or portions of the example outputs are illustrated by time periods 41a-e.

Time period 41a is the time delay caused during translation of at least part of the user speech 42, as discussed further below. Time period 41b is the duration of the user speech 42 and time period 41d is the duration of the translated speech 44. Time period 41e is the duration of the first audio output 46, which is at least equal to the sum of the time periods 41a and 41d. Time period 41c is the duration of the second audio output 48, which is equal to the duration after the user speech 42 ends until the provision of a translation portion 46b of the first audio output 46 ends.

The user speech 42 is received from the first user 2; the translated speech 44 is obtained from a translator 16 (e.g. translator 16a or 16b), and generated at the user device 14 or the server 20 (or elsewhere); the first audio output 46 is provided to the one or more receiving parties 6a-6c; and the second audio output 48 is provided to the first user 2.

Translated speech 44 illustrates how the translation of the user speech 42 may be generated. Time period 41a is the time delay caused during translation of at least part of the user speech 42 (in the example shown in FIG. 4, the time period 41a is shorter than the user speech 42, such that only a part of the user speech has been translated when the translated speech 44 is started). In a scenario where the translated speech 44 is provided to the one or more receiving parties 6a-6c, the one or more receiving parties 6a-6c may need to wait for a duration equal to the time period 41a to be able to hear the translated speech 44. As the one or more receiving parties 6a-6c may not know that the first user 2 is speaking, they may start speaking, and this may cause an overlap in speech. In order to solve this problem, according to at least some embodiments, the first audio output 46, including the initial portion 46a and the translated portion 46b, is provided to the one or more receiving parties 6a-6c.

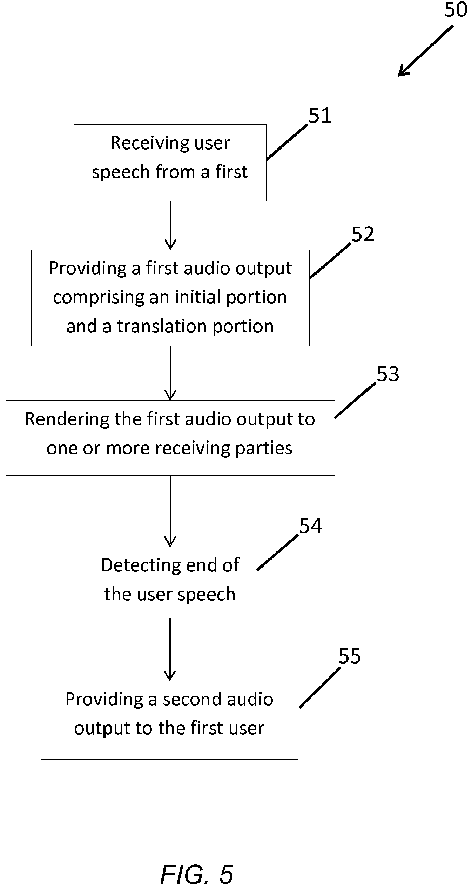

Fig. 4 may be viewed in conjunction with Fig. 5 for better understanding of the embodiment.

FIG. 5 is a flow chart showing an algorithm, indicated generally by the reference numeral 50, in accordance with an example embodiment.

The algorithm 50 starts at operation 51 where user speech 42 is received from a first user 2. At operation 52, the first audio output 46, comprising the initial portion 46a and the translation portion 46b, is generated (for example at the user device 14 or server 20). At operation 53, the first audio output 46 is rendered to at least some of the one or more receiving parties 6a-6c. At operation 54, end of user speech 42 is detected at the user device 14. At operation 55, the second audio output 48 is provided to the first user 2. Each operation of the algorithm 50 is discussed in more detail below.

At operation 51, the user speech 42 may be received by a user device 14, from the first user 2 via an audio input connected to or comprised within user device 14. Translated speech 44 is generated when the user speech 42 is translated. The translated speech 44 may be generated in real-time; thus, the translation can start before the entirety of the user speech 42 is received (as shown in FIG. 4).

In one example, viewing in conjunction with Fig. 2A, translated speech 44 is generated by translator 16a. When the user device 14a receives the user speech 42 from the first user 2, the user device 14a may send the user speech 42 to translator 16a, and then receive the translated speech 44 back from the translator 16a. In another example, the translator 16a is a speech-to-speech translation module comprised within user device 14b, and therefore the translated speech 44 is generated at the user device 14b.

In another example, viewing in conjunction with Fig. 2B, the user device 14a sends the user speech 42 to the server 20a, and the server 20a sends the user speech 42 to translator 16b for translation. The translator 16b then sends the translated speech 44 back to the server 20a. In another example, the translator 16b is a speech-to-speech translation module comprised within the server 20b, and therefore the translated speech 44 is generated at the server 20b.

At operation 52, the first audio output 46 is provided. The first audio output 46 comprises the initial portion 46a, and the translation portion 46b. The initial portion 46a comprises an initial part of the user speech 42, and the translation portion 46b comprises the translation of the user speech 42, i.e. translated speech 44. Time period 41a is the time delay caused during translation of at least part of the user speech 42. The time delay caused during translation may depend, for example, on the type or location of translation software and/or the length of the user speech 42. The duration of the initial portion 46a is equal to time period 41a. Therefore, a part of the user speech 42 having duration equal to the time period 41a is included in the first audio output 46.

In one example, viewing in conjunction with Fig. 2A, the translated speech 44 and the first audio output 46 are generated at the user device 14. The user device 14 combines the user speech 42 received in operation 51 and the translated speech 44 obtained from the translator 16a to generate the first audio output 46. The first audio output 46 is then sent to one or more of the receiving parties 6a-6c via server 20a.

In another example, viewing in conjunction with Fig. 2A, the translated speech 44 is generated at the user device 14, but the first audio output 46 is generated at server 20a. When the user device 14 receives the user speech 42 from the first user 2, the user device 14 sends the user speech 42 to the server 20a. User device 14 further sends the translated speech 44 to the server 20a. The server then combines the user speech 42 and translated speech 44 to generate the first audio output 46. The first audio output 46 is then sent to one or more of the receiving parties 6a-6c by the server 20a.

In another example, viewing in conjunction with Fig. 2B, the translated speech 44 and the first audio output 46 is generated at the server 20. When the user device 14a receives the user speech 42 from the first user 2, the user device 14a sends the user speech 42 to the server 20. The server 20 then combines the user speech 42 and translated speech 44 to generate the first audio output 46. The first audio output 46 is then sent to the one or more receiving parties 6a-6c by the server 20.

At operation 53, the first audio output 46, is rendered to the one or more of the receiving parties 6a-6c. For example, the first audio output 46 may be rendered using at least one audio output device, such as a loudspeaker, headphone, earphone, or the like. Each of the one or more receiving parties 6a-6c may or may not have a separate audio output device. When the first audio output 46 is rendered to the one or more receiving parties 6a-6c, the one or more receiving parties 6a-6c are able to hear a part of the user speech 42, followed by the translated speech 44.

At operation 54, end of the user speech 42 is detected at the user device 14. In one example, the end of user speech 42 is detected by a voice activity detection (VAD) module comprised within the user device 14. It would be known to those skilled in the art that a VAD module may be able to detect presence or absence of speech, and therefore is able to detect the end of user speech 42, i.e. detect when the first user 2 has finished speaking. In another example, the end of user speech 42 is detected by a predefined input from the first user 2. The first user 2 may click a button on a user interface of the user device 14, say a predefined code word, or send any input that may allow the user device 14 to detect the end of user speech 42, i.e. detect that the first user 2 has finished speaking. The predefined code word may be any word or phrase (for example, "over") defined by the first user 2 to indicate end of user the user speech 42, and may be recognized using a voice recognition module comprised within the user device 14.

At operation 55, the second audio output 48 is provided to the first user 2. Time period 41c represents the duration of the second audio output 48. The second audio output 48 is provided to the first user 2 only after the first user 2 has finished speaking, i.e. when the end of user speech 42 is detected at operation 54, such that the first user 2 does not hear his/her own speech or translation of his/her own speech while speaking. This allows a better experience for the first user 2. The second audio output 48 starts when the user speech 42 ends and continues until the translation portion 46b of the first audio output 46 is being provided to the one or more receiving parties 6a-6c. The second audio output 48 may then be rendered to the first user 2 using one or more audio output devices (such as loudspeakers, headphones, or the like) connected to or comprised within user device 14. When the first user 2 has finished speaking, the first audio output 46 is still being rendered to the one or more receiving parties 6a-6c.

As discussed above, the duration of the initial portion 46a of the first audio output 46 and the second audio output 48 are caused by delays in generating and rendering a translation of user speech. With translations occurring in real-time, this delay can be noticeable to users and can have variable duration.

The second audio output 48 is rendered to the first user 2 in order to indicate to the user that the receiving parties 6a-6c are still hearing the translation portion 46b of the first audio output 46. Providing the second audio output 48 to the first user 2 may indicate that the first user 2 should refrain from speaking when the one or more receiving parties 6a-6c are still listening to the first audio output 46, and hence any overlap of speech can be avoided. Alternatively, or in addition, in the event that the first user is anticipating a response (e.g. comments, questions or answers) from one or more receiving parties, providing the second audio output 48 to the first user can be used to indicate that such a response may not be occur until the translation has been rendered in full. Moreover, the first user 2 may refrain from ending the communication with the one or more receiving parties 6a-6c until the provision of the first audio output 46 ends.

In one example, the second audio output 48 comprises at least part of the translation portion 46b. The part of the translated portion 46b being rendered to the first user 2 during time period 41c may be the same as the part of the translation portion 46b being rendered to the one or more receiving parties 6a-6c during the same time period 41c. In another example the second audio output 48 comprises part of the user speech 42. In another example, the second audio output 48 is a predefined audio output, such as an automated speech, an automated sound, a pre-recorded message, or the like. It should be noted that for all the above mentioned examples, duration of the second audio output 48 is equal to time period 41c. When time period 41c ends, the second audio output 48 also ends.

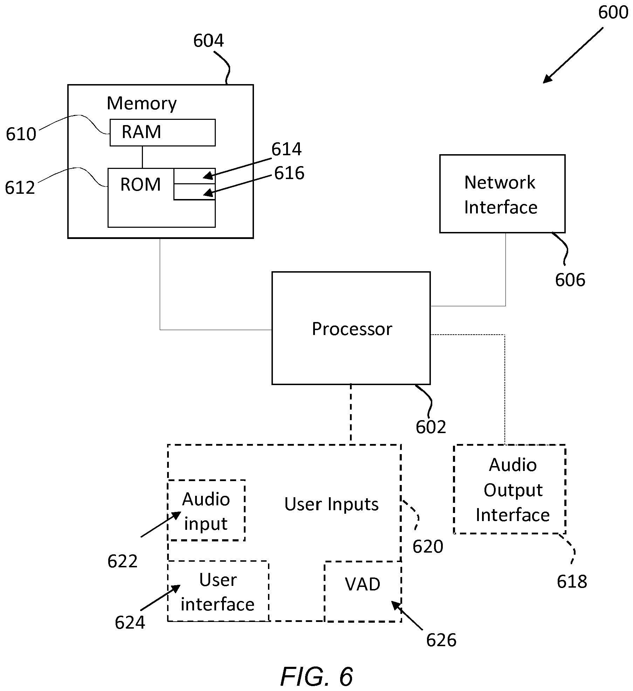

For completeness, FIG. 6 is a schematic diagram of components of one or more of the modules for implementing the algorithms described above, which hereafter are referred to generically as processing systems 600. A processing system 600 may have a processor 602, a memory 604 coupled to the processor 602 and comprised of a RAM 610 and ROM 612, and, optionally, user inputs 620 and an audio output interface 618. User inputs 620 may comprise an audio input 622, user interface 624 and voice activity detection (VAD) module 626. The processing system 600 may comprise one or more network interfaces 606 for connection to a network, e.g. a modem which may be wired or wireless.

The processor 602 is connected to each of the other components in order to control operation thereof.

The memory 604 may comprise a non-volatile memory, a hard disk drive (HDD) or a solid state drive (SSD). The ROM 612 of the memory 604 stores, amongst other things, an operating system 614 and may store software applications 616. The RAM 612 of the memory 604 is used by the processor 602 for the temporary storage of data. The operating system 614 may contain code which, when executed by the processor, implements aspects of the algorithms 30 and 50.

The processor 602 may take any suitable form. For instance, it may be a microcontroller, plural microcontrollers, a processor, or plural processors. Processor 602 may comprise processor circuitry.

The processing system 600 may be a standalone computer, a server, a console, or a network thereof.

In some embodiments, the processing system 600 may also be associated with external software applications. These may be applications stored on a remote server device and may run partly or exclusively on the remote server device. These applications may be termed cloud-hosted applications. The processing system 600 may be in communication with the remote server device in order to utilize the software application stored there.

In one example, viewing FIG. 6 in conjunction with FIGS. 1 to 5, the processing system 600 may represent the system of user device 14 and/or the server 20. The audio input 622 may be used for receiving user speech 42 and/or receiving a predefined input for detecting end of user speech 42. The user interface 624 may also be used for receiving a predefined input for detecting end of user speech 42. Alternatively, the VAD module 626 may be used for detecting end of user speech 42. The audio output interface 618 may be used for rendering the second audio output 48 to the first user 2. The network interface 606 may be used for sending the user speech 42, translated speech 44, and/or first audio output 46 to server 20 or one or more receiving parties 6a-6c.

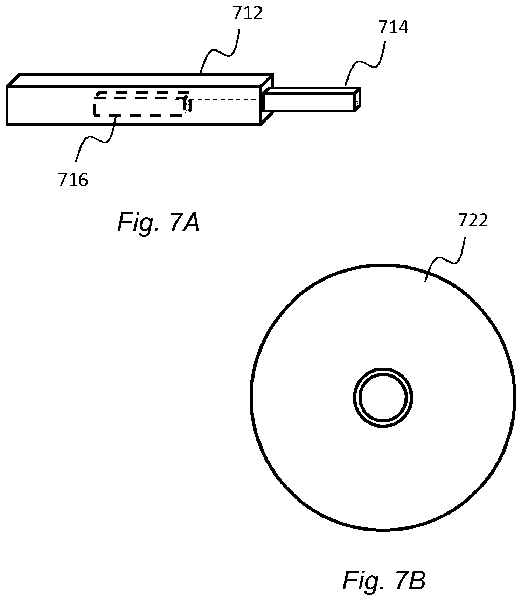

FIG. 7A and FIG. 7B show tangible media, respectively a removable memory unit 712 and a compact disc (CD) 722, storing computer-readable code which when run by a computer may perform methods according to embodiments described above. The removable memory unit 712 may be a memory stick, e.g. a USB memory stick, having internal memory 716 storing the computer-readable code. The internal memory 716 may be accessed by a computer system via a connector 714. The CD 722 may be a CD-ROM or a DVD or similar. Other forms of tangible storage media may be used.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "computer-readable storage medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices and other devices. References to computer program, instructions, code etc. should be understood to express software for a programmable processor firmware such as the programmable content of a hardware device as instructions for a processor or configured or configuration settings for a fixed function device, gate array, programmable logic device, etc.

As used in this application, the term "circuitry" refers to all of the following: (a) hardware-only circuit implementations (such as implementations in only analogue and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a server, to perform various functions) and (c) to circuits, such as a microprocessor(s) or a portion of a microprocessor(s), that require software or firmware for operation, even if the software or firmware is not physically present.

If desired, the different functions discussed herein may be performed in a different order and/or concurrently with each other. Furthermore, if desired, one or more of the above-described functions may be optional or may be combined. Similarly, it will also be appreciated that the flow diagram of FIGS. 3 and 5 are examples only and that various operations depicted therein may be omitted, reordered and/or combined.

It will be appreciated that the above described example embodiments are purely illustrative and are not limiting on the scope of the invention. Other variations and modifications will be apparent to persons skilled in the art upon reading the present specification.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the above describes various examples, these descriptions should not be viewed in a limiting sense. Rather, there are several variations and modifications which may be made without departing from the scope of the present invention as defined in the appended claims.

## Claims

1. An apparatus comprising:
means for providing a first audio output, the first audio output comprising an initial portion during which a part of a user speech of a first user is provided followed by a translation portion during which a translation of the user speech is provided, wherein the initial portion has a duration at least equal to a time delay caused by obtaining a translation of at least a first part of the user speech; and
means for providing a second audio output to the first user, wherein the second audio output is provided after the user speech ends until the provision of the translation portion of the first audio output ends.

2. An apparatus as claimed in claim 1, further comprising means for detecting the end of the user speech.

3. An apparatus as claimed in claim 2, wherein the means for detecting the end of user speech comprises a voice activity detection module.

4. An apparatus as claimed in claim 2 or claim 3, wherein the means for detecting the end of user speech comprises detecting a predefined input received from the first user.

5. An apparatus as claimed in any one of the preceding claims, wherein the second audio output comprises a part of the translation of the user speech.

6. An apparatus as claimed in any one of claims 1 to 4, wherein the second audio output comprises a second part of the user speech.

7. An apparatus as claimed in any one of the preceding claims, further comprising means for rendering the first audio output to one or more receiving parties and/or means for rendering the second audio output to the first user.

8. An apparatus as claimed in any one of the preceding claims, wherein the means comprise:
at least one processor; and
at least one memory including computer program code, the at least one memory and the computer program code configured, with the at least one processor, to cause the performance of the apparatus.

9. A method comprising:
providing a first audio output, the first audio output comprising an initial portion during which a part of a user speech of a first user is provided followed by a translation portion period during which a translation of the user speech is provided, wherein the initial portion has a duration at least equal to a time delay caused by obtaining a translation of at least part of the user speech; and
providing a second audio output to the first user, wherein the second audio output is provided after the user speech ends until the provision of the translation portion of the first audio output ends.

10. A method as claimed in claim 9, further comprising detecting the end of the user speech.

11. A method as claimed in claim 10, wherein the end of the user speech is detected using a voice activity detection module.

12. A method as claimed in claim 10 or claim 11, wherein the end of the user speech is detected by detecting a predefined input received from the first user.

13. A method as claimed in any one of claims 9 to 12, wherein the translation of the user speech and/or the first audio output is generated at a user device of the first user.

14. A method as claimed in any one of claims 9 to 12, wherein the translation of the user speech and/or the first audio output is generated at a server.

15. A computer program comprising instructions for causing an apparatus to perform at least the following:
providing a first audio output, the first audio output comprising an initial portion during which a part of a user speech of a first user is provided followed by a translation portion period during which a translation of the user speech is provided, wherein the initial portion has a duration at least equal to a time delay caused by obtaining a translation of at least part of the user speech; and
providing a second audio output to the first user, wherein the second audio output is provided after the user speech ends until the provision of the translation portion of the first audio output ends.
